# EUROPEAN PATENT APPLICATION

(11) **EP 2 857 171 A1**
(43) Date of publication of application: **08.04.2015**
(21) Application number: 12877530.1
(22) Date of filing: 04.06.2012
(51) Int. Cl.: B29C 47/00, B65D 33/00, B65D 1/00

(54) **METHOD FOR MANUFACTURING INSECT-REPELLENT RUBBISH BAGS BY BLOWN FILM EXTRUSION**

(30) Priority: 24.05.2012 ES 201230790
(71) Applicant: Plasbel Plasticos, S.A.U., 30820 Alcantarilla (Murcia) (ES)
(72) Inventor: BELTRAN BELMONTE, Francisco, E-30820 Alcantarilla (Murcia) (ES)
(74) Representative: Carlos Hernando, Borja
(86) International application number: PCT/ES2012/070413
(87) International publication number: WO 2013/175031

(57) **Abstract**

The present invention relates to a method for manufacturing insect-repellent rubbish bags, the bag being formed by thin layers of polyethylene and one of said layers being made up of insect-repellent additives essentially characterized in that the starting point is an extrusion machine (1) that produces a film (3) made up of thin layers of polyethylene such that a repellent additive is added to one of the layers.

## Description

### Object of the Invention

The proposed invention relates to a method for manufacturing insect-repellent rubbish bags by means of a blown film extrusion process such that an insect repellent is added to one of the thin layers of polyethylene, the method being that described below.

### Field of the Invention

The field of the invention generally involves that of plastic film manufacturers.

### Background of the invention

There are some background documents as regards familiar product derivatives with a different application, use or benefit with respect to that provided by the system described in this specification.

For example, reference can be made to main product derivatives such as a scented bag or an antibacterial bag.

The inventor is unaware of any prior art document that incorporates the arrangements of the present invention or the advantages entailed by said arrangement.

### Description of the invention

The proposed invention relates to a method for manufacturing insect-repellent rubbish bags formed by thin layers of polyethylene, an insect repellent being added to one of the layers, the method being that described below.

A conventional extrusion machine produces a film made up of thin layers of polyethylene such that a special repellent additive is added to one of the layers, in this case the repellent additive preferably being "citronella" which can be added in the form of granules.

Each layer is generated by an extruder such that the material supplied by the extruders converges in a single blow head through the nozzle (upper part of the head) of which the film flows.

This nozzle is ring-shaped such that when the plastic flows, a polyethylene cylinder closed at the upper part is formed, into which cylinder air is insufflated to form a bubble having the desired width and thickness.

By means of a folding system, that bubble is collapsed by means of a roller which in turn prevents the exit of air (extraction roller). This film (folded bubble) used to form a spool in the winding machine for subsequent storage is thus shaped.

The spool is then taken to the cutting and bag-making section where it is processed and transformed into rolls of garbage bags.

The rubbish bags thus formed gradually release the repellent, in this case citronella, accumulated in one of its layers in a slow but continuous manner such that it produces the envisaged repellent effect.

### Description of the Drawings

To better understand the invention, a sheet of drawings showing the following is attached.

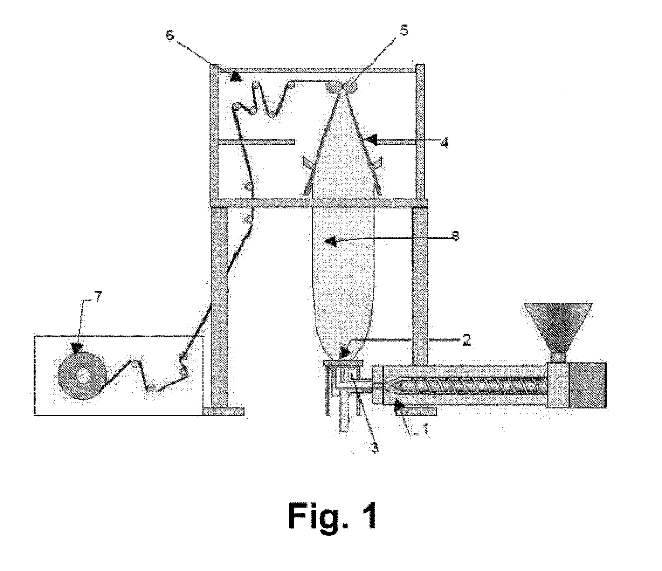

Figure 1 shows a schematic view of the method.

In said drawing, identical elements are given the same reference, distinguishing the following:
(1) - extruder
(2) - film outlet nozzle
(3) - film
(4) - re-conducting element (folding calender)
(5) - joining rollers (extraction roller)
(6) - treatment area
(7) - winding machine

### Preferred Embodiment of the Invention

The proposed invention relates to a method for manufacturing insect-repellent rubbish bags formed by thin layers of polyethylene, an insect repellent being added to one of the layers, the method being that described below.

The extrusion machine (1) produces a film (3) made up of thin layers of polyethylene such that a special repellent additive is added to one of the layers, in this case the repellent additive preferably being "citronella" which can be added in the form of granules.

This film (3) thus made is released through a nozzle (2) such that a bubble (8) is formed.

That bubble (8) is passed by means of a flat connector (4) through rollers (5) passing through a treatment area (6) where this film which is subsequently wound in the winding machine (7) for subsequent storage is shaped.

In a subsequent phase, the spool is processed in the cutter for preparing rolls of garbage bags.

The rubbish bags thus formed gradually release the repellent, citronella in this case, accumulated in one of its layers in a slow but continuous manner such that it produces the envisaged repellent effect.

Having sufficiently described the nature of the invention as well as the manner of putting it into practice, it is hereby stated that the arrangements indicated above and depicted in the attached drawings are susceptible to detail modifications as long as they do not alter the fundamental principles established in the preceding paragraphs and summarized in the following claims.

## Claims

1. A method for manufacturing insect-repellent rubbish bags by means of a blown film extrusion process, the bag being formed by thin layers of polyethylene and one of said layers being made up of insect-repellent additives, essentially **characterized in that** the starting point is an extrusion machine (1) that produces a film (3) made up of thin layers of polyethylene such that a repellent additive is added to one of its layers, and such that the film (3) thus made is released through a nozzle (2) such that a bubble (8) is formed, and where said bubble (8) is passed by means of a flat connector (4) through rollers (5) passing through a treatment area (6) where this film is shaped for being passed to the winding cylinder (7) where it is stored until subsequent processing in which the spool will be transformed into rolls of garbage bags.
